# EUROPÄISCHE PATENTSCHRIFT

(11) **EP 0 840 027 B1**
(45) Veröffentlichungstag und Bekanntmachung des Hinweises auf die Patenterteilung: **19.12.2001**
(21) Anmeldenummer: 97810667.2
(22) Anmeldetag: 16.09.1997
(51) Int. Cl.: F16C 33/10, F16C 17/04

(54) **Axialgleitlager**
Sliding axial bearing
Palier axial à glissement.

(30) Priorität: 11.10.1996 DE 19641673
(43) Veröffentlichungstag der Anmeldung: 06.05.1998
(73) Patentinhaber: ABB Turbo Systems AG, 5401 Baden (CH)
(72) Erfinder: Loos, Markus, 5400 Baden (CH); Werro, Jean-Yves, 8957 Spreitenbach (CH); Wohlrab, Raimund, Dr., 5400 Baden (CH)
(74) Vertreter: ABB Patent Attorneys

(56) Entgegenhaltungen:
- DE-A- 2 033 412
- DE-A- 3 025 876
- DE-A- 3 140 017
- DE-A- 3 244 893
- DE-A- 4 411 617
- DE-U- 7 819 938
- FR-A- 1 461 141
- GB-A- 829 481
- GB-A- 1 095 999
- US-A- 3 656 823
- US-A- 4 639 148
- US-A- 4 726 695
- US-A- 5 567 056

## Beschreibung

### Technisches Gebiet

Die Erfindung betrifft ein Axialgleitlager gemäss dem Oberbegriff des Anspruchs 1 und ein Verfahren zu dessen Betrieb.

### Stand der Technik

Zur Lagerung von Turboladern werden häufig hydrodynamische Gleitlager eingesetzt. Als Axialgleitlager kommen üblicherweise Festsegmentlager zum Einsatz. Diese bestehen aus einem fest mit dem Lagergehäuse verbundenen Lagerkörper mit einer profilierten Kreisringfläche und einer mit der Welle rotierenden, ebenen Gleitfläche des sogenannten Lagerkamms. Die profilierte Seite weist mehrere radiale Schmiernuten sowie entsprechende Keil- und Rastflächen auf (s. DE-A1 32 44 893). Sie kann ebenso am Lagerkamm angeordnet sein.

Beim Betrieb des Turboladers baut sich aufgrund der Scherströmung des Schmieröls zwischen der ebenen und der profilierten Fläche ein tragfähiger, hydrodynamischer Schmierfilm auf. Die Schmierfilmdicke hängt unter anderem von der Belastung des Lagers ab und kann bei hohen Druckverhältnissen mit ca. 20µm sehr klein werden.

In der Regel wird die Schmierung eines solchen Axialgleitlagers vom Schmiersystem der mit dem Turbolader verbundenen Brennkraftmaschine übernommen. Dabei wird deren relativ grosser Schmierölstrom nur grob gefiltert, d.h. mit einer Maschenweite von etwa 35 bis 50µm. Aufgrund seiner hohen Drehzahlen und der engen Schmierspalte benötigt der Turbolader jedoch Schmieröl feinerer Konsistenz. Eine separate Filtrierung für den Turbolader ist meist nicht möglich bzw. zu aufwendig und deshalb relativ teuer (s. DE-A1 44 11 617).

Bei hohen Druckverhältnissen kann die minimale Schmierfilmdicke insbesondere am Axialgleitlager kleiner werden als die grössten Schmutzpartikel, welche das Motorfilter passieren. Dies kann einen frühzeitigen Verschleiss der Lagerflächen, speziell der Keilflächen verursachen. Wenn jedoch die minimal erforderliche Keilfläche des Lagers unterschritten wird, ist dieses nicht mehr betriebssicher. In diesem Fall muss mit einem baldigen Ausfall des Lagers gerechnet werden. Demnach ist das Axialgleitlager von Turboladern ein verschleissgefährdetes Bauteil.

Mit der DD 49 087 ist ein Axialgleitlager für Turbomaschinen bekannt, welches aus einem fest mit einem Lagergehäuse verbundenen Lagerkörper, einem mit der Welle rotierenden Lagerkamm sowie einem zwischen beiden ausgebildeten Schmierspalt besteht. Der Schmierspalt ist zwischen einer profilierten, um die Welle rotierenden Kreisringfläche und einer ebenen, feststehenden Gleitfläche ausgebildet. Die Kreisringfläche weist mehrere radial angeordnete Schmierölnuten sowie jeweils eine mit diesen in Umfangsrichtung verbundene Keilfläche auf, wobei Schmierölnuten und Keilflächen einander abwechselnd auf der Kreisringfläche angeordnet sind. Die Schmierölnuten werden nach aussen von jeweils einem Dichtsteg begrenzt. Jeder Dichtsteg besitzt eine ihn durchdringende und nach radial aussen führende Spülöffnung.

Beim Betrieb einer solchermassen gelagerten Turbomaschine kommt es jedoch dazu, dass ein wesentlicher Teil des Schmieröls über den Rand der profilierten Kreisringfläche, d.h. genauer über die Keilflächen nach aussen abfliessen kann. Dadurch verringert sich der Druckaufbau im Schmierspalt, so dass letzterer kleiner wird. Dies führt zu einem vermehrten Abrieb durch Schmutzpartikel und damit zu einer Veringerung der Lebensdauer des Lagers.

Aus dem DE-U1 78 19 938 ist ein Axialgleitlager für Abgasturbolader bekannt, bei dem eine zwischen dem feststehenden Lagerkörper und dem drehenden Lagerkamm angeordnete Schwimmscheibe auf der Turboladerwelle geführt wird. Die Schwimmscheibe weist eine Mehrflächengeometrie mit beidseitig angeordneten, spiralförmigen Ölnuten auf, welche bis hin zu einem Berührungsbereich mit dem Lagerkörper bzw. dem Lagerkamm auslaufen. Mit Hilfe dieser Nuten wird zwischen dem Lagerkörper und der Schwimmscheibe einerseits sowie zwischen der Schwimmscheibe und dem Lagerkamm andererseits, jeweils ein Schmierfilm aufgebaut.

Bei einer solchen Lösung mit Schwimmscheibe wird sowohl die Verlustleistung des Turboladers verringert als auch, aufgrund des doppelten Schmierspaltes, das Schiefstellungskompensationsvermögen seines Schublagers erhöht. Zusätzlich wird die relative Geschwindigkeit durch die Scheibendrehung auf etwa die halbe Läuferdrehzahl reduziert und damit das Verschleissverhalten des Schublagers deutlich verbessert. Allerdings kann bei einer solchen Schwimmscheibe die minimale Schmierfilmdicke ebenfalls kleiner sein als die grössten Schmutzpartikel des Schmieröls, so dass auch mit ihrem Einsatz die oben beschriebenen Nachteile nicht beseitigt werden können.

### Darstellung der Erfindung

Die Erfindung versucht, alle diese Nachteile zu vermeiden. Ihr liegt die Aufgabe zugrunde, ein einfaches und kostengünstiges Axialgleitlager mit verringertem Verschleiss und verbesserter Lebensdauer zu schaffen. Ausserdem soll ein Verfahren zu dessen Betrieb angegeben werden.

Erfindungsgemäss wird dies dadurch erreicht, dass bei einer Vorrichtung gemäss dem Oberbegriff des Anspruchs 1, die zum Druckaufbau im Schmierfilm erforderliche profilierte Kreisringfläche des Schmierspaltes um die oder mit der Welle rotierend ausgebildet ist. Sie weist mehrere radial angeordnete Schmierölnuten sowie jeweils eine an diese in Umfangsrichtung anschliessende Keilfläche auf. Zwischen jeder Keilfläche sowie der ihr benachbarten Schmierölnut ist eine Rastfläche ausgebildet. Die Schmierölnuten und die Keilflächen werden nach radial aussen von einem Dichtsteg begrenzt. Der Dichtsteg ist im Bereich der Schmierölnuten mit zu diesen und ebenfalls nach radial aussen offenen Schmutznuten ausgestattet.

Aufgrund dieser Ausbildung rotieren die Schmierölnuten und mit ihnen die radial aussen angeordneten Schmutznuten, so dass die im grob gereinigten Schmieröl enthaltenen grösseren Schmutzpartikel vor Erreichen des Schmierspaltes, genauer im Bereich der Schmierölnuten, auszentrifugiert werden. Dabei wird wegen der in den radialen Schmierölnuten auf das Gemisch von Schmieröl und Schmutzpartikeln wirkenden Fliehkraft eine Separierung erreicht. Die Schmutzpartikel werden aufgrund ihrer grösseren Dichte nach aussen gedrängt und mit dem Schmierölstrom durch die Schmutznuten nach aussen abgeschleudert. Damit wirken die Schmutznuten gewissermassen als Bypass für den zwischen den Rastflächen der profilierten Kreisringfläche und der ebenen Gleitfläche des Lagerkörpers am engsten ausgebildeten Schmierspalt.

Zudem wird durch den nicht nur die Schmierölnuten sondern auch die Keilflächen nach aussen begrenzenden Dichtsteg erreicht, dass im Bereich der Keilflächen weniger Schmieröl nach radial aussen abfliessen kann. Damit wird der Druckaufbau verbessert, was zu einem grösseren Schmierspalt, zu einem verringerten Abrieb und letztlich zu einer höheren Standzeit des Lagers führt. Diese Wirkung wird durch die Anordnung der Rastflächen, welche den Druckaufbau zwischen der ebenen Gleitfläche des Lagerkörpers und der profilierten Kreisringfläche des Lagerkammes verbessern, noch verstärkt. Infolge der Kombination einer Lagergeometrie höchster Tragkraft mit dem Auszentrifugieren grober Schmutzpartikel durch die Schmutznuten, kann der Lagerverschleiss so weit minimiert werden, dass die Anforderungen an die Standzeit moderner Abgasturboladerkomponenten erfüllt werden.

In einer ersten Ausgestaltungsform der Erfindung sind die profilierte Kreisringfläche am Lagerkamm und die ebene Gleitfläche am Lagerkörper angeordnet. Demnach rotiert das Schmieröl in den Schmierölnuten mit der Welle und die Schmutzpartikel werden über die Schmutznuten auszentrifugiert. Aufgrund des somit verringerten Verschleisses der Keilflächen des Schmierspaltes kann die Standzeit eines Kammlagers vorteilhaft erhöht werden.

Bei einer zweiten Ausgestaltungsform der Erfindung ist zwischen dem Lagerkamm und dem Lagerkörper eine Schwimmscheibe angeordnet. Diese weist beidseitig eine profilierte Kreisringfläche auf. Sowohl der Lagerkamm als auch der Lagerkörper sind mit einer ebenen Gleitfläche ausgebildet. Dabei rotiert das Schmieröl in den beiden Schmierölnuten der Schwimmscheibe um die Welle und die Schmutzpartikel werden ebenfalls über die Schmutznuten auszentrifugiert. Eine Kombination dieser an sich bekannten Schwimmscheibe mit den Schmutznuten verbessert das Verschleissverhalten des Lagers nachhaltig.

Besonders vorteilhaft besitzen jede Keilfläche eine Eintrittskeiltiefe und jede Schmutznut eine Tiefe, wobei letztere dem 0,5 bis 3fachen der Eintrittskeiltiefe entspricht. In diesem Grössenbereich sind die Schmutznuten so dimensioniert, dass einerseits die groben Schmutzpartikel die Öffnung der entsprechenden Schmutznut leicht passieren können und andererseits der Schmierölstrom durch diese Schmutznuten nicht zu gross wird.

Das im Schmierölkreislauf der Brennkraftmaschine angeordnete Filter hat eine solche Maschenweite, mit deren Hilfe das Schmieröl dem Bedarf der Brennkraftmaschine entsprechend grob gefiltert wird. Die Tiefe jeder Schmutznut entspricht zumindest dem 2fachen dieser Maschenweite des Filters. Eine solche Tiefe verhindert vorteilhaft Verstopfungen der Schmutznuten.

Es ist besonders zweckmässig, wenn die Tiefe jeder Schmutznut geringer als die 2fache Eintrittskeiltiefe der entsprechenden Keilfläche ausgebildet ist. Damit kann die zum Ableiten der Schmutzpartikel benötigte Ölmenge, respektive der Ölverbrauch verringert werden.

Bei beiden Ausgestaltungsformen wird eine optimale Tragkraft des Axialgleitlagers dann erreicht, wenn die Ausdehnung der Rastflächen annähernd 1/4 der Ausdehnung der gesamten Keilflächen des Lagers ausmacht.

### Kurze Beschreibung der Zeichnung

In der Zeichnung sind zwei Ausführungsbeispiele der Erfindung anhand der Lagerung eines mit einer Brennkraftmaschine verbundenen Abgasturboladers dargestellt.

Es zeigen:
- Fig. 1: eine schematische Darstellung des gemeinsamen Schmierölkreislaufs der Brennkraftmaschine und des Abgasturboladers;
- Fig. 2: einen Teillängsschnitt durch den Abgasturbolader, im Bereich seines Axialgleitlagers;
- Fig. 3: eine Ansicht der profilierten Kreisringfläche des Lagerkammes entlang der Linie III-III in Fig. 2;
- Fig. 4: einen Schnitt durch den Lagerkamm entlang der Linie IV-IV in Fig. 3;
- Fig. 5: einen vergrösserten Ausschnitt der Fig. 3, im Bereich der Verbindung von Schmierölnut und Schmutznut;
- Fig. 6: einen vergrösserten Ausschnitt der Fig. 4, im Bereich der Schmutznut;
- Fig. 7: eine Darstellung analog der Fig. 2, jedoch mit der zwischen Lagerkörper und Lagerkamm angeordneten Schwimmscheibe;
- Fig. 8: einen Schnitt durch die Schwimmscheibe entlang der Linie VIII-VIII in Fig. 7;
- Fig. 9: einen Schnitt durch die Schwimmscheibe entlang der Linie IX-IX in Fig. 8.

Es sind nur die für das Verständnis der Erfindung wesentlichen Elemente gezeigt. Nicht dargestellt ist von der Anlage beispielsweise der Abgasweg von der Brennkraftmaschine zum Abgasturbolader, einschliesslich der Aufladung der Brennkraftmaschine. Die Strömungsrichtung des Schmieröls und die Drehrichtung der profilierten Kreisringfläche sind mit Pfeilen bezeichnet.

### Weg zur Ausführung der Erfindung

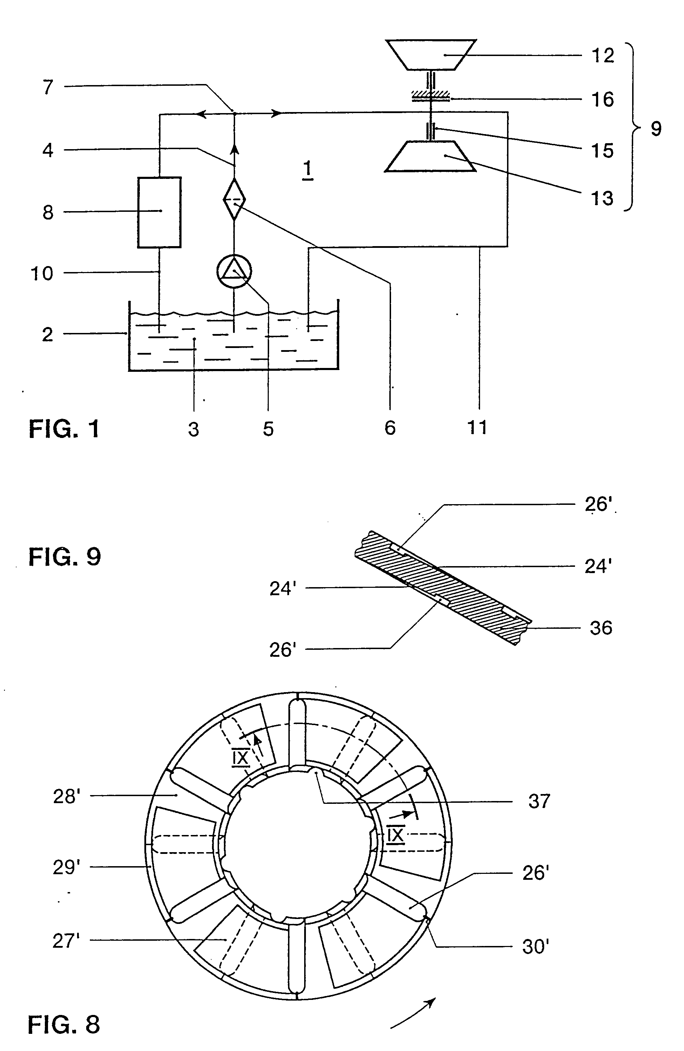

Der Schmierölkreislauf 1 besteht aus einer Ölwanne 2, einer Schmieröl 3 aus der Ölwanne 2 in eine Ölleitung 4 liefernden Ölpumpe 5, einem Filter 6, einer Verzweigung 7 der Ölleitung 4 zu einer als Dieselmotor ausgebildeten Brennkraftmaschine 8 bzw. zu einem Abgasturbolader 9 und aus jeweils einer Rückführleitung 10, 11 zur Ölwanne 2. Der nur schematisch dargestellte Abgasturbolader 9 besitzt eine Verdichterseite 12 und eine Turbinenseite 13, die über eine Welle 14 miteinander verbunden sind. Sowohl verdichter- als auch turbinenseitig ist zur Lagerung der Welle 14 jeweils ein Radialgleitlager 15 angeordnet. Zwischen den Radialgleitlagern 15 ist zur Aufnahme der Axialkräfte des Abgasturboladers 9 ein Axialgleitlager 16 ausgebildet. (Fig. 1).

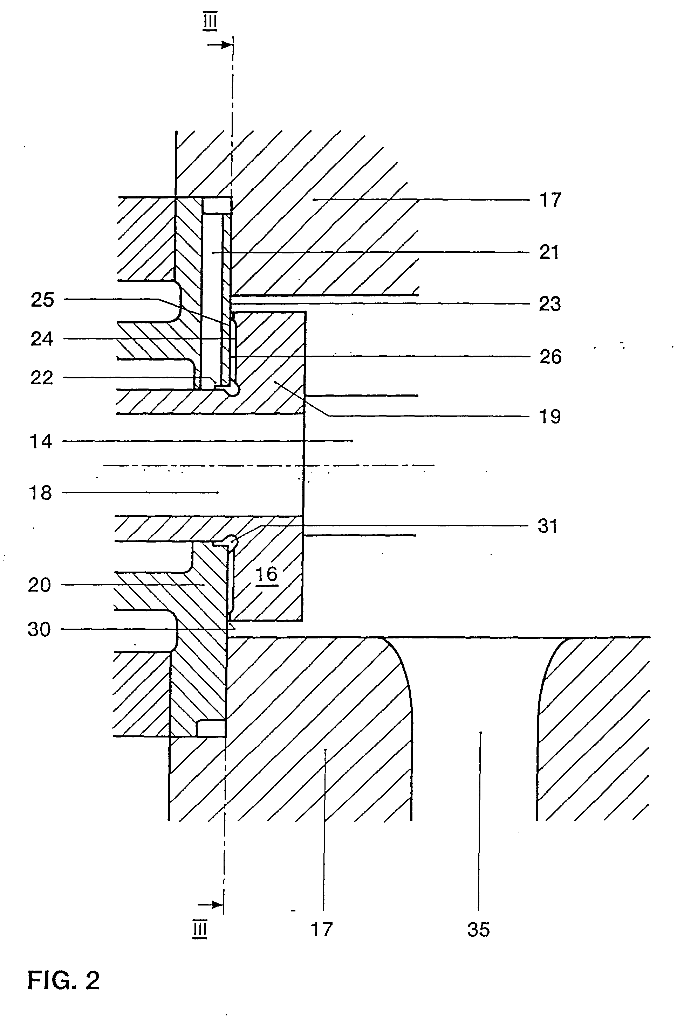

Das Axialgleitlager 16 besteht aus einem Lagergehäuse 17 und einem mit einem Lagerzapfen 18 der Welle 14 fest verbundenen, drehenden Lagerkamm 19, der mit einem feststehenden Lagerkörper 20 zusammenwirkt. Im Lagerkörper 20 ist eine als radialer Ölkanal ausgebildete Ölzuführung 21 angeordnet, die an ihrem äusseren Ende mit dem gemeinsamen Schmierölkreislauf 1 der Brennkraftmaschine 8 und des Abgasturboladers 9 verbunden ist. Der radiale Ölkanal 21 weist an seinem inneren Ende einen Ringkanal 22 auf (Fig. 2).

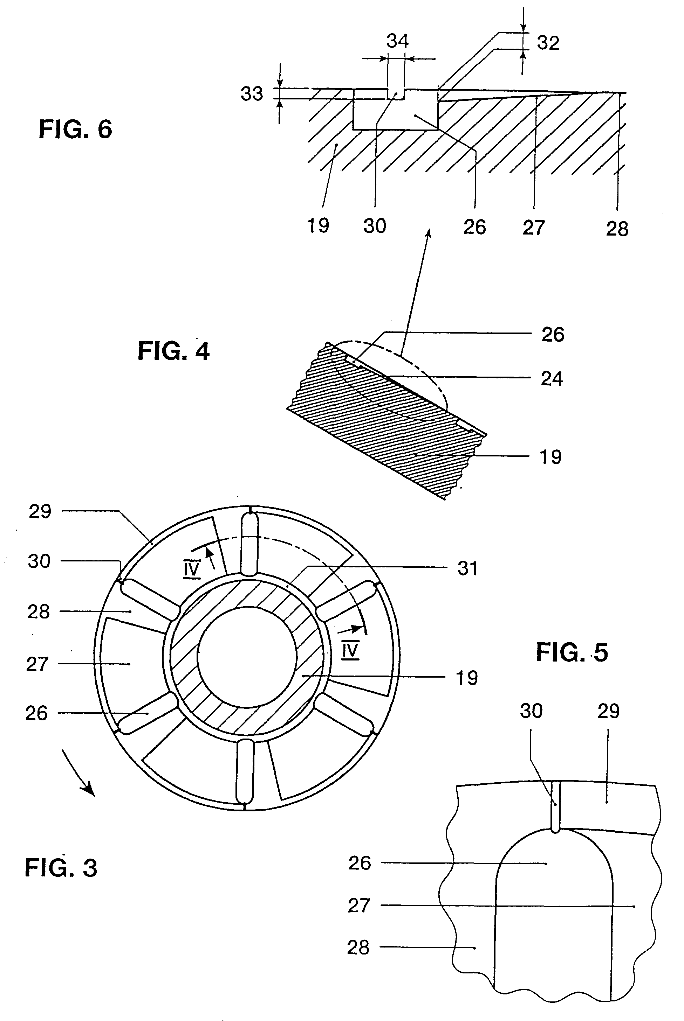

An seiner dem Lagerkamm 19 zugewandten Seite besitzt der Lagerkörper 20 eine ebene Gleitfläche 23, während die dem Lagerkörper 20 zugewandte Seite des Lagerkammes 19 mit einer profilierten Kreisringfläche 24 ausgestattet ist (Fig. 2, Fig. 3). Zwischen der profilierten Kreisringfläche 24 und der ebenen Gleitfläche 23 ist ein die Tragfähigkeit des Axialgleitlagers 16 bestimmender Schmierspalt 25 ausgebildet.

Die profilierte Kreisringfläche 24 besteht aus mehreren an jeweils eine radiale Schmierölnut 26 in Umfangsrichtung anschliessenden Keilflächen 27. Im Bereich zwischen jeder Keilfläche 27 und der ihr benachbarten Schmierölnut 26 ist jeweils eine ebene Rastfläche 28 angeordnet. Sowohl die Schmierölnuten 26 als auch die Keilflächen 27 werden nach radial aussen von einem Dichtsteg 29 begrenzt. Letzterer weist im Bereich der Schmierölnuten 26 zu diesen offene, radial ausgerichtete Schmutznuten 30 auf. Nach radial aussen, d.h. in Richtung des Lagergehäuses 17 sind die Schmutznuten 30 ebenfalls offen ausgebildet (Fig. 3 bis Fig. 6). Am Lagerkamm 19, genauer an der Basis seiner profilierten Kreisringfläche 24 ist eine Ringnut 31 ausgebildet, welche die Schmierölnuten 26 miteinander und mit dem Ringkanal 22 des Lagerkörpers verbindet.

Der Schmierspalt 25 ist zwischen den Rastflächen 28 der profilierten Kreisringfläche 24 und der ebenen Gleitfläche 23 des Lagerkörpers 20 am engsten ausgebildet. Die Keilflächen 27 weisen eine Eintrittskeiltiefe 32 und die Schmutznuten 30 eine Tiefe 33 auf, wobei letztere das 1,5fache der Eintrittskeiltiefe 32 beträgt (Fig. 6). Das in der Figur 1 nur schematisch gezeigte Filter 6 hat eine nicht dargestellte Maschenweite, bezüglich dieser die Tiefe 33 der Schmutznuten 30 auf etwa das 3fache vergrössert ist. Dabei besitzen die Schmutznuten 30 eine Nutweite 34, welche etwa um die Breite des Schmierspaltes 25 gegenüber ihrer Tiefe 33 vergrössert ist. Ausschliesslich zum Zweck der Darstellung der Schmutznuten 30 in der Figur 2 wurde ihre Nutweite 34 gegenüber den anderen Bauteilen überdimensioniert.

Beim Betrieb des Dieselmotors 8 wird das benötigte Schmieröl 3 mittels der Ölpumpe 5 aus der Ölwanne 2 gefördert und im Filter 6 grob gereinigt. Von dort aus gelangt das Schmieröl 3 über eine Verzweigung 7 in der Ölleitung 4 zu den nicht dargestellten Lagerstellen des Dieselmotors 8 bzw. zu den beiden Radialgleitlagern 15 und dem Axialgleitlager 16 des Abgasturboladers 9 (Fig. 1).

Im Axialgleitlager 16 wird das Schmieröl 3 durch den radialen Ölkanal 21 des feststehenden Lagerkörpers 20, dessen Ringkanal 22 und die Ringnut 31 des Lagerkammes 19 zu den Schmierölnuten 26 gefördert (Fig. 2). Aufgrund der somit permanenten Beaufschlagung der Schmierölnuten 26 aus dem Schmierölkreislauf 1, der Rotation der profilierten Kreisringfläche 24 des Lagerkammes 19 und des aussen angeordneten Dichtstegs 29 gelangt das Schmieröl 3 ausgehend von den Schmierölnuten 26 jeweils über die Keilflächen 27 in den sich verengenden Schmierspalt 25 (Fig. 3). Von dort aus wird es durch die Scherströmung in Richtung der Rastflächen 28 gezogen und zum grössten Teil seitlich über den Dichtsteg 29 hinweg ausgepresst, wobei sich zwischen letzterem und der ebenen Gleitfläche 23 des Lagerkörpers 20 der engste Schmierspalt 25 ausbildet. Der Dichtsteg 29 verengt den Strömungsquerschnitt für das radial nach aussen gepresste Schmieröl 3, wodurch der Druck im Schmierspalt 25 erhöht und der Schmierölverbrauch des Axialgleitlagers 16 vermindert wird. Gleichzeitig wird das in den radialen Schmierölnuten 26 mit der Welle 14 rotierende Schmieröl 3 durch die Fliehkraftwirkung separiert. Dabei werden die Schmutzpartikel aufgrund ihrer grösseren Dichte nach aussen gedrängt und mit einem Teilstrom des Schmieröls 3 durch die Schmutznuten 30 nach aussen abgeschleudert (Fig. 5).

Letztlich fliesst sowohl der durch den Schmierspalt 25 geleitete Hauptstrom als auch der durch die Schmutznuten 30 geführte Teilstrom des Schmieröls 3, einschliesslich der Schmutzpartikel, durch einen im Lagergehäuse 17 ausgebildeten Ölablauf 35 ab und wird über die Rückführleitung 11 in die Ölwanne 2 des Dieselmotors 8 abgeleitet (Fig. 1, Fig. 2).

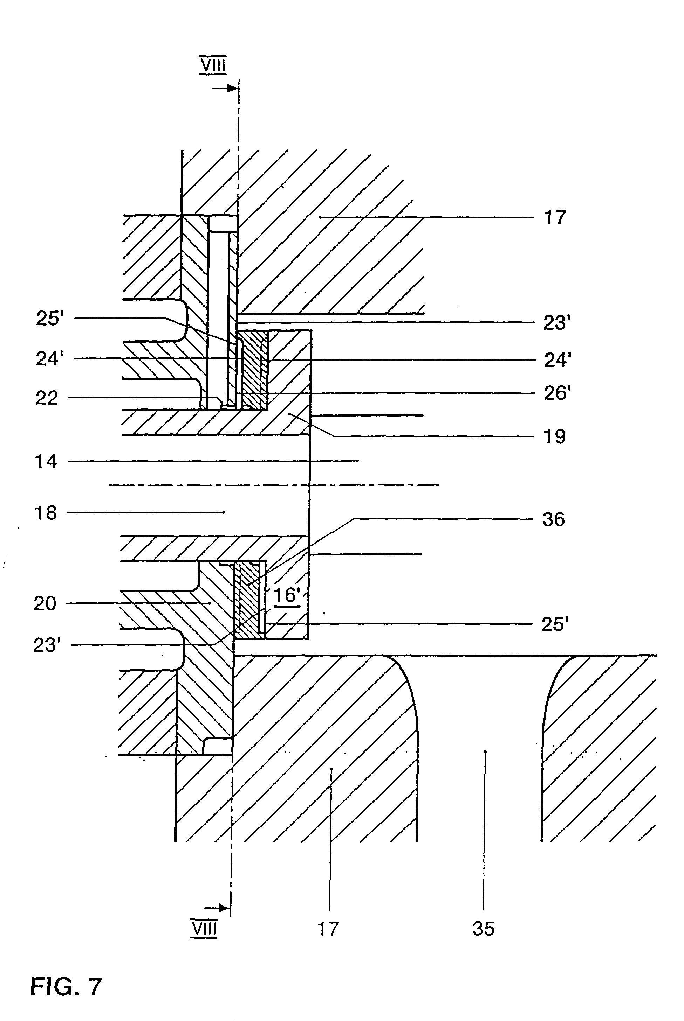

In einem zweiten Ausführungsbeispiel ist zwischen dem feststehenden Lagerkörper 20 und dem drehenden Lagerkamm 19 eine Schwimmscheibe 36 angeordnet (Fig. 7). Diese besitzt beidseitig eine profilierte Kreisringfläche 24', welche analog der Kreisringfläche 24 des Lagerkammes 19 im ersten Ausführungsbeispiel ausgebildet ist. Demnach besteht jede Kreisringfläche 24' aus mehreren radialen Schmierölnuten 26' mit an diese in Umfangsrichtung anschliessenden Keilflächen 27' und ebenen Rastflächen 28'. Die Schmierölnuten 26' und die Keilflächen 27' werden nach radial aussen von einem Dichtsteg 29' begrenzt, wobei dieser analog dem ersten Ausführungsbeispiel ausgebildete Schmutznuten 30' aufweist. Die Schmierölnuten 26' der beiden Kreisringflächen 24' sind untereinander über schräge Ausnehmungen 37 im Inneren der Schwimmscheibe 36 verbunden (Fig. 8, Fig. 9). Sowohl der Lagerkamm 19 als auch der Lagerkörper 20 sind auf ihrer der Schwimmscheibe 36 zugewandten Seite mit einer ebenen Gleitfläche 23' ausgestattet (Fig. 7). Der weitere Aufbau des Axialgleitlagers 16' stimmt im wesentlichen mit dem des ersten Ausführungsbeispiels überein.

Bei dieser Ausbildung des Axialgleitlagers 16' wird auf beiden Seiten der Schwimmscheibe 36 jeweils ein Schmierspalt 25' ausgebildet. Der erste Schmierspalt 25' ist zwischen der ebenen Gleitfläche 23' des Lagerkörpers 20 und der dieser zugewandten, profilierten Kreisringfläche 24' der Schwimmscheibe 36 und der zweite zwischen der ebenen Gleitfläche 23' des Lagerkammes 19 und der dieser zugewandten, profilierten Kreisringfläche 24' der Schwimmscheibe 36 angeordnet. Hierbei erfolgt das Separieren und Herausschleudern der Schmutzpartikel des Schmieröls 3 im wesentlichen wie beim ersten Ausführungsbeispiel. Im Unterschied dazu rotieren die profilierten Kreisringflächen 24' der Schwimmscheibe 36 nicht mit der, sondern um die Welle 14, was die Reinigungswirkung der Schmutznuten 30' jedoch nicht beeinträchtigt. Da die relative Geschwindigkeit in den Schmierspalten 25' durch die Drehung der Schwimmscheibe 36 auf etwa die halbe Drehzahl der Welle 14 reduziert wird, kann das Verschleissverhalten des Axialgleitlagers 16' und insbesondere seiner Keil- 27' und Rastflächen 28' deutlich verbessert werden.

Eine optimale Tragkraft des Axialgleitlagers 16, 16' wird in beiden Ausführungsbeispielen dann erreicht, wenn die Ausdehnung der Rastflächen 28, 28' annähernd 1/4 der Ausdehnung der Keilflächen 27, 27' des Lagers ausmacht (Fig. 3, Fig. 8).

### Bezugszeichenliste

- 1: Schmierölkreislauf
- 2: Ölwanne
- 3: Schmieröl
- 4: Ölleitung
- 5: Ölpumpe
- 6: Filter
- 7: Verzweigung
- 8: Brennkraftmaschine, Dieselmotor
- 9: Abgasturbolader
- 10: Rückführleitung, von 8
- 11: Rückführleitung, von 9
- 12: Verdichterseite
- 13: Turbinenseite
- 14: Welle
- 15: Radialgleitlager
- 16: Axialgleitlager
- 17: Lagergehäuse
- 18: Lagerzapfen
- 19: Lagerkamm
- 20: Lagerkörper
- 21: Ölzuführung, radialer Ölkanal
- 22: Ringkanal
- 23: Gleitfläche, eben
- 24: Kreisringfläche, profiliert
- 25: Schmierspalt
- 26: Schmierölnut, radial
- 27: Keilfläche
- 28: Rastfläche
- 29: Dichtsteg
- 30: Schmutznut
- 31: Ringnut
- 32: Eintrittskeiltiefe
- 33: Tiefe, von 30
- 34: Nutweite
- 35: Ölablauf
- 36: Schwimmscheibe
- 37: Ausnehmung
- 16': Axialgleitlager
- 23': Gleitfläche, von 19 und 20
- 24': Kreisringfläche, von 36
- 25': Schmierspalt
- 26': Schmierölnut, radial
- 27': Keilfläche
- 28': Rastfläche
- 29': Dichtsteg
- 30': Schmutznut

## Patentansprüche

1. Axialgleitlager zur Lagerung der Welle (14) eines mit einer Brennkraftmaschine (8) verbundenen und über deren Schmierölkreislauf (1) mit in einem Filter (6) grob gereinigtem Schmieröl (3) versorgten Abgasturboladers (9), bestehend aus einem fest mit einem Lagergehäuse (17) verbundenen Lagerkörper (20), einem mit der Welle (14) verbundenen Lagerkamm (19) sowie zumindestens einem zwischen beiden ausgebildeten Schmierspalt (25, 25'), welcher von einer profilierten Kreisringfläche (24, 24') sowie einer ebenen Gleitfläche (23, 23') gebildet wird und mit einer Ölzuführung (21) verbunden ist, **dadurch gekennzeichnet, dass**
a) die profilierte Kreisringfläche (24, 24') um die oder mit der Welle (14) rotierend ausgebildet ist:, mehrere radial angeordnete Schmierölnuten (26, 26') sowie jeweils eine mit diesen in Umfangsrichtung verbundene Keilfläche (27, 27') aufweist und zwischen jeder Keilfläche (27, 27') sowie der ihr benachbarten Schmierölnut (26, 26') eine Rastfläche (28, 28') ausgebildet ist,
b) die Schmierölnuten (26, 26') und die Keilflächen (27, 27') nach radial aussen von einem Dichtsteg (29, 29') begrenzt werden,
c) der Dichtsteg (29, 29') im Bereich der Schmierölnuten (26, 26') zu diesen und nach aussen offene Schmutznuten (30, 30') aufweist.

2. Axialgleitlager nach Anspruch 1, **dadurch gekennzeichnet, dass** die profilierte Kreisringfläche (24) am Lagerkamm (19) und die ebene Gleitfläche (23) am Lagerkörper (20) angeordnet sind.

3. Axialgleitlager nach Anspruch 1, **dadurch gekennzeichnet, dass** zwischen dem Lagerkamm (19) und dem Lagerkörper (20) eine an sich bekannte Schwimmscheibe (36) mit beidseitig einer profilierten Kreisringfläche (24') angeordnet ist und sowohl der Lagerkamm (19) als auch der Lagerkörper (20) mit einer ebenen Gleitfläche (23') ausgebildet sind.

4. Axialgleitlager nach Anspruch 2 oder 3, **dadurch gekennzeichnet, dass** jede Keilfläche (27, 27') eine Eintrittskeiltiefe (32) und jede Schmutznut (30, 30') eine Tiefe (33) besitzen und letztere dem 0,5 bis 3fachen der Eintrittskeiltiefe (32) entspricht.

5. Axialgleitlager nach Anspruch 4, **dadurch gekennzeichnet, dass** die Ausdehnung der Rastflächen (28, 28') annähernd 1/4 der Ausdehnung der Keilflächen (27, 27') des Axialgleitlagers (16) ausmacht.

6. Axialgleitlager nach Anspruch 5, **dadurch gekennzeichnet, dass** das Filter (6) eine Maschenweite besitzt und die Tiefe (33) der Schmutznuten (30, 30') zumindest dem 2fachen der Maschenweite entspricht.

7. Axialgleitlager nach Anspruch 5, **dadurch gekennzeichnet, dass** die Tiefe (33) der Schmutznuten (30, 30') geringer als die 2fache Eintrittskeiltiefe (32) ausgebildet ist.

8. Verfahren zum Betrieb eines Axialgleitlagers nach einem der Ansprüche 1 bis 7, **dadurch gekennzeichnet, dass** im grob gereinigten Schmieröl (3) enthaltene grössere Schmutzpartikel vor Erreichen des Schmierspaltes (25, 25') auszentrifugiert werden.

9. Verfahren nach Anspruch 8, **dadurch gekennzeichnet, dass** das Auszentrifugieren der Schmutzpartikel im Bereich der Schmierölnuten (26, 26') erfolgt.

## Claims

1. Axial sliding bearing for mounting the shaft (14) of an exhaust gas turbocharger (9) connected to an internal combustion engine (8) and supplied by way of the lubricating oil circuit (1) of the latter with lubricating oil (3) coarsely purified in a filter (6), said bearing comprising a bearing body (20) connected fixedly to a bearing housing (17), a bearing collar (19) connected to the shaft (14) and at least one lubricating gap (25, 25'), which is designed between the two and which is formed by a profiled annular surface (24, 24') and a plane sliding surface (23, 23') and is connected to an oil feed (21), **characterized in that**
a) the profiled annular surface (24, 24') is designed to rotate about or with the shaft (14), has a plurality of radially arranged lubricating oil grooves (26, 26') and, in each case, a wedge surface (27, 27') connected to these in the circumferential direction, and a catch surface (28, 28') is formed between each wedge surface (27, 27') and the lubricating oil groove (26, 26') adjacent to the latter,
b) the lubricating oil grooves (26, 26') and the wedge surfaces (27, 27') are delimited radially outward by a sealing web (29, 29'),
c) the sealing web (29, 29') has, in the region of the lubricating oil grooves (26, 26'), dirt grooves (30, 30') open to these and to the outside.

2. Axial sliding bearing according to Claim 1, **characterized in that** the profiled annular surface (24) is arranged on the bearing collar (19) and the plane sliding surface (23) is arranged on the bearing body (20).

3. Axial sliding bearing according to Claim 1, **characterized in that** a floating disc (36) known per se, with a profiled annular surface (24') on both sides, is arranged between the bearing collar (19) and the bearing body (20) and both the bearing collar (19) and the bearing body (20) are designed with a plane sliding surface (23').

4. Axial sliding bearing according to Claim 2 or 3, **characterized in that** each wedge surface (27, 27') has an entry wedge depth (32) and each dirt groove (30, 30') has a depth (33) and the latter corresponds to 0.5 to 3 times the entry wedge depth (32).

5. Axial sliding bearing according to Claim 4, **characterized in that** the extent of the catch surfaces (28, 28') amounts to approximately 1/4 of the extent of the wedge surfaces (27, 27') of the axial sliding bearing (16).

6. Axial sliding bearing according to Claim 5, **characterized in that** the filter (6) has a mesh width and the depth (33) of the dirt grooves (30, 30') corresponds at least to twice the mesh width.

7. Axial sliding bearing according to Claim 5, **characterized in that** the depth (33) of the dirt grooves (30, 30') is designed to be smaller than twice the entry wedge depth (32).

8. Method for operating an axial sliding bearing according to one of Claims 1 to 7, **characterized in that** larger dirt particles contained in the coarsely purified lubricating oil (3) are centrifuged out before they reach the lubricating gap (25, 25').

9. Method according to Claim 8, **characterized in that** the dirt particles are centrifuged out in the region of the lubricating oil grooves (26, 26').

## Revendications

1. Palier lisse axial pour le montage de l'arbre (14) d'un turbocompresseur à gaz d'échappement (9) raccordé à un moteur à combustion interne (8) et alimenté, via son circuit d'huile de lubrification (1), en huile de lubrification (3) grossièrement épurée dans un filtre (6), ledit palier étant constitué d'un corps de palier (20) relié de façon fixe à un logement de palier (17), d'un collet de palier (19) relié à l'arbre (14) ainsi qu'au moins d'un interstice de lubrification (25, 25') formé entre les deux éléments, ledit interstice étant formé d'une surface profilée (24, 24') d'anneau circulaire ainsi que d'une surface de glissement plane (23, 23') et étant relié à une alimentation en huile (21), **caractérisé en ce que** :
a) la surface profilée (24, 24') d'anneau circulaire est conformée de manière à pouvoir tourner autour de l'arbre (14) ou avec celui-ci, présente plusieurs rainures à huile de lubrification (26, 26') disposées radialement ainsi que, à chaque fois, une surface à coin (27, 27') reliée à celles-ci dans la direction périphérique et une surface d'arrêt (28, 28') est formée entre chaque surface à coin (27, 27') ainsi qu'entre la rainure à huile de lubrification (26, 26') qui lui est voisine,
b) les rainures à huile de lubrification (26, 26') et les surfaces à coin (27, 27') sont délimitées radialement vers l'extérieur par un bord d'étanchéité (29, 29'),
c) le bord d'étanchéité (29, 29') présente, dans la zone des rainures à huile de lubrification (26, 26') des rainures à crasses (30, 30') ouvertes vers celles-ci et vers l'extérieur.

2. Palier lisse axial selon la revendication 1, **caractérisé en ce que** la surface profilée (24) d'anneau circulaire est disposée sur le collet de palier (19) et la surface de glissement plane (23) est disposée sur le corps de palier (20).

3. Palier lisse axial selon la revendication 1, **caractérisé en ce que**, entre le collet de palier (19) et le corps de palier (20) est disposé un disque flottant (36) connu en soi, présentant sur les deux côtés une surface profilée (24') d'anneau circulaire et aussi bien le collet de palier (19) que le corps de palier (20) sont conformés avec une surface de glissement plane (23').

4. Palier lisse axial selon la revendication 2 ou 3, **caractérisé en ce que** chaque surface à coin (27, 27') possède une profondeur de coin d'entrée (32) et chaque rainure à crasses (30, 30') possède une profondeur (33) et cette dernière correspond à 0,5 à 3 fois la profondeur de coin d'entrée (32).

5. Palier lisse axial selon la revendication 4, **caractérisé en ce que** l'étendue des surfaces d'arrêt (28, 28') constitue approximativement un quart de l'étendue des surfaces à coin (27, 27') du palier lisse axial (16).

6. Palier lisse axial selon la revendication 5, **caractérisé en ce que** le filtre (6) possède une largeur de maille et la profondeur (33) des rainures à crasses (30, 30') correspond au moins à deux fois la largeur de maille.

7. Palier lisse axial selon la revendication 5, **caractérisé en ce que** la profondeur (33) des rainures à crasses (30, 30') est inférieure à 2 fois la profondeur de coin d'entrée (32).

8. Procédé d'exploitation d'un palier lisse axial selon l'une quelconque des revendications 1 à 7, **caractérisé en ce que** des particules de crasses plus grosses contenues dans l'huile de lubrification (3) grossièrement épurée sont séparées par centrifugation avant d'atteindre l'interstice de lubrification (25, 25').

9. Procédé selon la revendication 8, **caractérisé en ce que** la séparation par centrifugation des particules de crasses se fait dans la zone des rainures à huile de lubrification (26, 26').
